# EUROPÄISCHE PATENTSCHRIFT

(11) **EP 0 335 352 B1**
(45) Veröffentlichungstag und Bekanntmachung des Hinweises auf die Patenterteilung: **12.01.1994**
(21) Anmeldenummer: 89105497.5
(22) Anmeldetag: 29.03.1989
(51) Int. Cl.: H02K 11/00, H02K 5/14

(54) **Becherförmiger Träger bestimmt für einen Elektromotor**
Cup shaped support intended for an electric motor
Support en forme de godet, destiné à un moteur électrique

(30) Priorität: 31.03.1988 DE 3810961
(43) Veröffentlichungstag der Anmeldung: 04.10.1989
(73) Patentinhaber: SCHUNK Motorensysteme GmbH, D-27777 Ganderkesee (DE)
(72) Erfinder: Köster, Walter, D-2875 Ganderkesee 1 (DE)
(74) Vertreter: Stoffregen, Hans-Herbert, Dr. Dipl.-Phys.

(56) Entgegenhaltungen:
- EP-A- 0 219 681
- DE-A- 3 239 238
- GB-A- 2 182 501

## Beschreibung

Die Erfindung bezieht sich auf einen becherförmigen Träger aus Kunststoff bestimmt für einen Elektromotor wie dauermagneterregten Motor zur Aufnahme von mit dem Kommutator des Motors zusammenwirkenden Kohlebürsten, elektrischen und elektronischen Bauelementen z.B. zur Funkenentstörung sowie diese verbindenden Leiterbahnen.

Der EP-A 109 538 ist ein Elektrowerkzeug mit eine becherförmigen Träger zuvor beschriebener Art zu entnehmen. Die elektrische Verbindung der Elemente erfolgt durch Verdrahtungen, durch die eine Einschränkung der Verschaltung der elektrischen Bauelemente gegeben ist. Auch ist ein problemloses und dichtes Einbringen der Bauelemente in den Träger nicht möglich. Dieses ist insbesondere bei weitgehend vollautomatischen Montagestraßen von Nachteil.

Aufgabe der vorliegenden Erfindung ist es, einen becherförmigen Träger der eingangs genannten Art so auszubilden, daß im gewünschten Umfang die Kohlebürsten und die elektrischen und elektronischen Bauelemente mit dem Elektromotor problemlos verschaltet werden können, ohne daß im Vergleich zu bekannten Trägern mehr Platz erforderlich ist. Gleichzeitig soll die Möglichkeit einer einfachen Bestückung des Trägers bzw. der Leiterbahnen möglich sein.

Die Aufgabe wird im wesentlichen dadurch gelöst, daß die Aufnahmekammern in Richtung des Bodenbereichs des Trägers sich zum Bodenbereich erstreckende, als Führungen für Anschlußfahnen der Bauelemente dienende Durchbrechungen aufweisen, daß der Bodenbereich außenseitig mit einem aus Blechmaterial bestehenden, die Leiterbahnen bildenden Gitter versehen ist und daß der Träger mit einem Deckelelement auf der dem Bodenbereich gegenüberliegenden Stirnseite zumindest bereichsweise verschließbar ist, an dem außenseitig eine Flachdichtung anordbar ist.

Erfindungsgemäß wird folglich der Träger dahingehend ausgebildet, daß er im wesentlichen koaxial zur Rotorwelle des Motors verlaufende Kammern aufweist, in die über- und/oder nebeneinander die für z.B. eine Entstörung oder eine Drehzahlregelung erforderlichen elektrischen und elektronischen Bauelemente und Schaltungen einbringbar sind. Hierdurch ist eine trägerkonstruktionsbedingte Aufnahme für die Bauelemente vorgegeben, die erkennbar ein Bestücken auf der einen Seite erleichtert und auf der anderen Seite die Möglichkeit eröffnet, die Bauelemente bzw. Schaltungen dicht gepackt um die Welle bzw. den Kommutator herum anzuordnen. Auf engstem Raum werden demzufolge Schaltungsmöglichkeiten eröffnet, die sonst nur durch baumäßig größere Anordnungen zur Verfügung gestellt werden können.

Insbesondere zeichnet sich die Erfindung dadurch aus, daß das Gitter ein zumindest einstufig tiefgezogenes Blechteil ist. Dabei können die Leiterbahnen in unterschiedlichen, bereichsweise zueinander abgewinkelten Ebenen verlaufen und zumindest teilweise dem Verlauf einer Krümmung folgen. Dadurch, daß das Gitter ein vorzugsweise mehrstufig tiefgezogenes Teil ist, können auf engstem Raum Leiterbahnen in unterschiedlichen Ebenen verlaufen. Bei z.B. einer Bogenform kann problemlos eine rinnenförmige Struktur gewonnen werden, die bei gestanzten Gittern nur im sehr eingeschränktem Umfang realisierbar wäre, nämlich dann, wenn zuvor das ebene Blechmaterial entlang der Bogenform Einschnitte erfährt, durch die ohne Faltenbildung die rinnenförmige Geometrie ermöglicht werden würde. All diese Maßnahmen sind durch ein tiefgezogenes Gitter nicht erforderlich. Auch kann eine durch ein Stanzgitter nicht erzielbare Dichte von Leiterbahnen gewonnen werden.

Nach einem weiteren hervorzuhebenden Vorschlag der Erfindung ist vorgesehen, daß die den Motor mit Strom versorgenden Kabel vollständig innerhalb der beidseitig druckbeaufschlagten Dichtung verlaufen. Dabei sind in diesem Bereich die Kabel abisoliert und vorzugsweise verzinnt. Eine entsprechende Lösung ist insbesondere dann von Vorteil, wenn der Elektromotor von zusammensetzbaren Gehäusen aufgenommen ist, wobei zwischen einander zugewandten Stirnflächen der Gehäuse die Dichtung verläuft, die aus zusammendrückbarem elastischem Material besteht. Durch diese Maßnahme ist es nicht mehr erforderlich, daß an einer Gehäuseseitenwandung ein Ausschnitt vorgesehen ist, durch die die Kabel hindurchgeführt werden. Durch entsprechende Maßnahmen könnte es nämlich zu Undichtigkeiten kommen. Die erfindungsgemäß ausgebildete Dichtung kann dabei aus einem thermoplastisch verarbeitbaren Elastomer, insbesondere aus einem dynamisch vernetzten Polyolefinelastomer bestehen.

Um eine raumsparende Kabelführung in dem Träger zu gewährleisten, wird des weiteren vorgeschlagen, daß die elektrischen Leitungen des Kabels in parallel zur Längsachse des Ansatzes verlaufende zueinander beabstandete und außerhalb des Ansatzes verlaufende Bohrungen des Trägers zu dem auf der dem Deckelelement fernliegenden Stirnseite des Trägers angeordneten Gitter geführt werden. Dabei können die elektrischen Leitungen zwischen dem Ansatz und den Bohrungen von sich in Richtung der Stirnfläche sich erstreckende stegförmige Wandungen umgeben sein, die vorzugsweise innenseitig mit von der Innenfläche des Deckenelementes zu dessen Lagefixierung abragende Vorsprünge zusammenwirken.

Um die Anschlußfahnen der in die Kammern oder Vertiefungen einzubringenden elektrischen Bauelemente nahezu von selbst zu dem im Bodenbereich des Trägers angeordneten Gitter zu lenken, weisen die Kammern bodenseitig vorzugsweise konisch sich verjüngende Durchbrechungen auf, die als Führungen für die Anschlußfahnen dienen. Fällt ein elektrisches Bauelement von oben in eine Kammer hinein, so rutschen die Anschlußfahnen automatisch durch die Durchbrechungen zu dem Gitter, um dort elektrisch leitend verbunden zu werden, was z.B. in einem Lötbad erfolgen kann. Durch diese Maßnahme ist eine Montagefreundlichkeit gegeben, die einen nahezu vollautomatischen Produktionsablauf ermöglicht.

Zu dem tiefgezogenen Gitter selbst ist noch folgendes zu bemerken. Hierdurch ergibt sich die Möglichkeit, daß ein nahezu beliebig geformtes dreidimensionales Gitter zur Verfügung gestellt wird, duch das eine hohe Dichte von Leiterbahnen auf engstem Raum zur Verfügung gestellt wird. Dabei kann das Ziehgitter vorzugsweise topfförmig ausgebildet werden und ragt mit seinen vorzugsweise konisch verlaufenden Randabschnitten in den Bodenbereich des Trägers hinein, um dort lagefixiert und mit den elektrischen Bauelementen bzw. den Bürstenkohlen verschaltet zu werden. Dabei können die einzelnen Strompfade zum Teil erst dann durch gezieltes Trennen des Ziehgitters gewonnen werden, wenn dieses von dem Träger aufgenommen ist.

Des weiteren bezieht sich die Erfindung auf ein Verfahren zur Bestückung eines becherförmigen Trägers aus Kunststoff, bestimmt für einen Elektromotor für z.B. ein Elektrowerkzeug oder einen Fensterheber, mit Kohlebürsten und elektrischen und elektronischen Bauelementen, die in Kammern und/oder Vertiefungen des Trägers angeordnet werden und mittels Leiterbahnen verschaltet werden.

Ein solches Verfahren zeichnet sich durch die Verfahrensschritte aus
- Einbringen der elektrischen und elektronischen Bauelemente in die zum Bodenbereich des Trägers sich erstreckenden, Durchbrechungen aufweisenden Kammern oder Vertiefungen, wobei die Anschlußfahnen der Bauelemente die Durchbrechungen durchsetzen und mit ihren freien Enden außenseitig über dem Bodenbereich des Trägers hervorstehen,
- Anordnen eines die Leiterbahnen bildenden Gitters von außen auf den Bodenbereich des Trägers und Fixieren dessen,
- Elektrisch leitendes Verbinden der Anschlußfahnen mit dem Gitter und
- bereichsweises Freischneiden des Gitters zur Erzielung der erforderlichen Leiterbahnen.

Dabei kann vor dem Freischneiden des Gitters Abschneiden der über das Gitter vorstehenden freien Enden der Anschlußfahnen erfolgen. Das elektrisch leitende Verbinden von Anschlußfahne und Gitter erfolgt vorzugsweise in einem Lötbad. Durch all diese Maßnahmen kann ein vollautomatischer Montageablauf erfolgen.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von in der Zeichnung dargestellten bevorzugten Ausführungsbeispielen.

Es zeigen:
- Fig. 1: eine Vorderansicht eines erfindungsgemäßen Trägers,
- Fig. 2: die Innenfläche eines den Träger nach Fig. 1 abdeckenden Deckelelementes,
- Fig. 3: eine auf der Außenseite des Deckels nach Fig. 2 anordbare Dichtung,
- Fig. 4: eine auseinandergezogene Darstellung des Trägers, Deckels und Dichtelementes nach Fig. 1 bis 3 mit Gitter und weiterer Dichtung,
- Fig. 5: eine weitere Ausführungsform eines Trägers mit Deckel, Dichtung und Gitter in auseinandergezogener Darstellung und
- Fig. 6: ein Gitter in Drauf- und Seitenansicht.

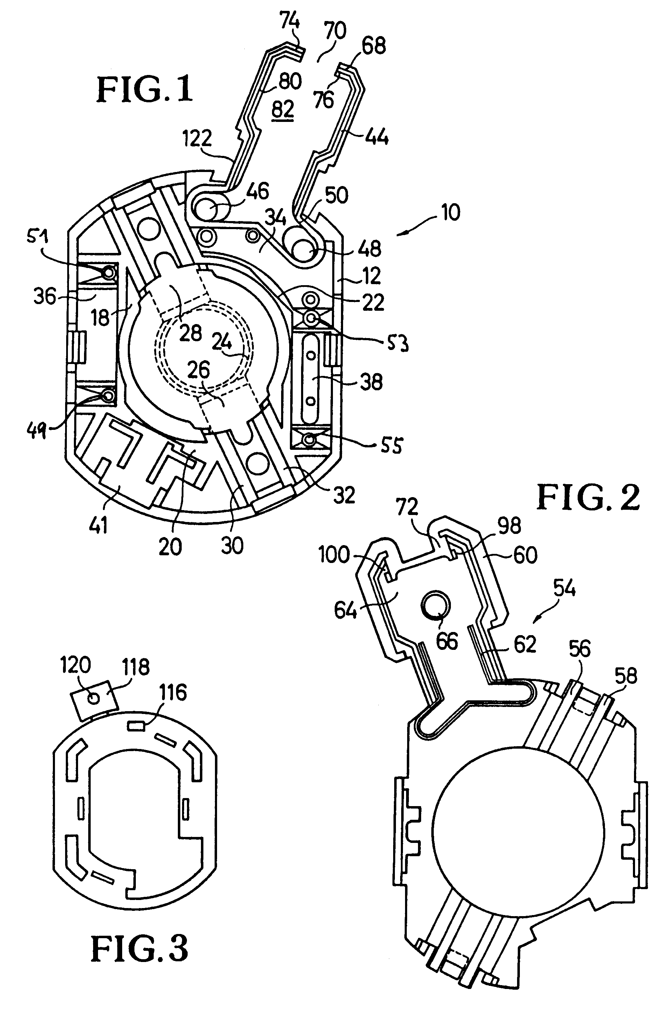

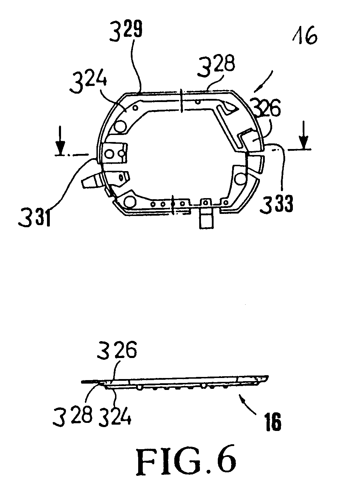

In Fig. 1 ist in Draufsicht ein aus Kunststoff bestehender topf- oder becherförmiger Träger (10) dargestellt, der eine zylindrische Wandung (12) und eine Bodenfläche (14) aufweist, die teilweise ein Gitter (16) aufnimmt (Fig. 6), das vorzugsweise ein tiefgezogenes Teil ist. Durch die Herstellungsart bedingt wird ein dreidimensionales Gitter zur Verfügung gestellt, das eine hohe Anzahl und Dichte von Leiterbahnen zur Verfügung stellt.

Das Gehäuse des Trägers (10) ist zumindest bereichsweise doppelwandig ausgebildet. In der zeichnerischen Darstellung ist dies beispielhaft durch Wandungen (18), (20) oder (22) angedeutet. Die Wandungen verlaufen im wesentlichen konzentrisch zu einem von dem Träger (10) aufgenommenen Kommutator (24) eines Elektromotors, an dem Kohlebürsten (26) und (28) zum Anliegen kommen. Die Kohlebürsten (26) und (28) sind von stegförmigen Wandungen geführt aufgenommen, die beispielhaft mit den Bezugszeichen (30) und (32) versehen sind.

Durch die Doppelwandigkeit des Gehäuses des Trägers (10) werden eine Vielzahl von Kammern gebildet, die wiederum beispielhaft mit den Bezugszeichen (34), (36), (38) und (41) bezeichnet sind. In diese Kammern können elektrische und elektronische Bauteile wie Kondensatoren, Entstörungsdrosseln, Wärmefühler oder aber eine elektronische Drehzahlregelung angeordnet werden.

Dabei stellt die Kammerausbildung sicher, daß die Bauelemente einfach und gegebenenfalls voll automatisch und überaus dicht angeordnet werden können, um mit den Leiterbahnen des Gitters (16) und über elektrische Leitungen (40), (42) eines Kabels mit einer Spannungsquelle bzw. den Kohlebürsten (26) und (28) verschaltet zu werden.

Damit die Anschlußfahnen der elektrischen Bauteile problemlos nach außen zu dem Gitter (16) geführt werden, sind in den Kammern bodenseitig Durchbrechungen vorgesehen, die -ebenfalls beispielhaft- mit den Bezugszeichen (49), (51), (53) und (55) versehen sind. Diese Durchbrechungen, die als Führungs- und Verbindungskanäle wirken, die sich zum Boden hin verjüngen, dienen als Führungen für die elektrischen Anschlüsse wie Anschlußfahnen, woduch beim Einbringen der Bauelemente von der offenen Stirnseite des Trägers (10) aus ein automatisches Hineinrutschen in die Kammern erfolgt, wobei gleichzeitig die Anschlußfahnen durch die auch als Führungskanäle zu bezeichnenden Durchbrechungen (49), (51), (53), (55) geführt nach außen gelangen. Hierdurch bedingt ist ein automatisches Einbringen der elektrischen Bauelemente möglich, so daß sich eine Handmontage erübrigt. Die Ausbildung der Kammern und die Anordnung der in diesen vorhandenen Durchbrechungen werden auf die Größe und Lage der einzubringenden Bauelemente ausgerichtet. Die elektrischen Leitungen (40) und (42) können über einen als Durchführung ausgebildeten Ansatz (44) in den Träger (10) eingeführt werden, und zwar von der dem Boden (14) fernliegenden, also der in Fig. 1 dargestellten Seite, um über zum Boden hin konisch verlaufenden Bohrungen (46) und (48) zum Boden und damit zum Gitter (16) geführt zu werden.

Der Bereich, in dem die elektrischen Leitungen (40) und (42) von dem Ansatz (44) zu den Bohrungen oder Führungskanälen (46) und (48) verlaufen, ist von einer umlaufenden stegförmigen in Richtung der offenen Seite sich erstreckenden Wandung (50) begrenzt, die folglich in etwa der Geometrie eines Y folgt.

Die Stirnseite (52) des Trägers, über die die Leitungen (40) und (42) in das Gehäuse des Trägers (10) geführt werden, wird von einem Deckel (54) verschlossen, der mit dem Gehäuse des Trägers (10) über nicht näher bezeichnete Vorsprünge bzw. Ausnehmungen verrastbar ist. Die Innenfläche des Deckels (54) weist ferner stegartige Vorsprünge (56) und (58) auf, die zur Führung der in dem Gehäuse des Trägers (10) angeordneten Kohlebürsten (26) und (28) dient. Ferner ist der Deckel (54) mit einem Ansatz (60) versehen, der bei den Träger (10) verschließender Stellung dessen Ansatz (44) aufnimmt.

Die Innenfläche des Deckels (54) weist einen abragenden ebenfalls der Geometrie eines Y folgenden stegartigen Vorsprung (62) auf, der der Wandung (50) des Gehäuses derart angepaßt ist, daß der Vorsprung (62) an der Innenseite der Wandung (50) zum Anliegen kommt. Außenseitig ist der Ansatz (60) mit einer Abdeckfläche (64) versehen, die eine Durchbrechung wie Bohrung (66) aufweist.

Der Ansatz (64) ist rohrförmig mit offenen Stirnflächen ausgebildet und weist an der dem Träger abgewandten Außenfläche (68) einen durchgehenden Schlitz (70) auf. Dieser Geometrie angepaßt geht von dem Ansatz (60) des Deckelelements (54) ein Vorsprung (72) aus, der in den Schlitz (70) einbringbar ist und gleichzeitig die Randbereiche (74) und (76) des Schlitzes(70) erfaßt. Bei mit dem Deckel (54) versehenem Träger (10) wird demzufolge von den Ansätzen (44) und (60) eine von elektrischen Leitungen (40) und (42) durchsetzte Kammer gebildet, die deckelseitig von der Fläche (64) und bodenseitig von einer Klemmdichtung (78) verschlossen ist.

Außenseitig wird der Deckel (54) von einer Flachdichtung (116) abgedeckt, die einen seitlich abragenden Abschnitt (118) mit einem in Richtung des Ansatzes (60) verlaufenden Vorsprung (120) umfaßt, der in die Öffnung (66) einrastbar ist.

Der Ansatz (44) ist mit der Außenwandung (12) des Trägers (10) über eine Brücke (122) verbunden. In dem Zwischenraum zwischen dem Ansatz (44) und der Außenwandung (12) wird eine die Brücke (122) umschließende Dichtung (124) angeordnet, die seinerseits geschlitzt, also im Schnitt U-förmig ist, um so den Träger (10) in einem Motorgehäuse anzuordnen, aus dem der Ansatz (44) seitlich abragt. Die für die Brücke (62) vorgesehene Durchbrechung in dem Motorgehäuse wird dann von der Dichtung (124) abgedichtet.

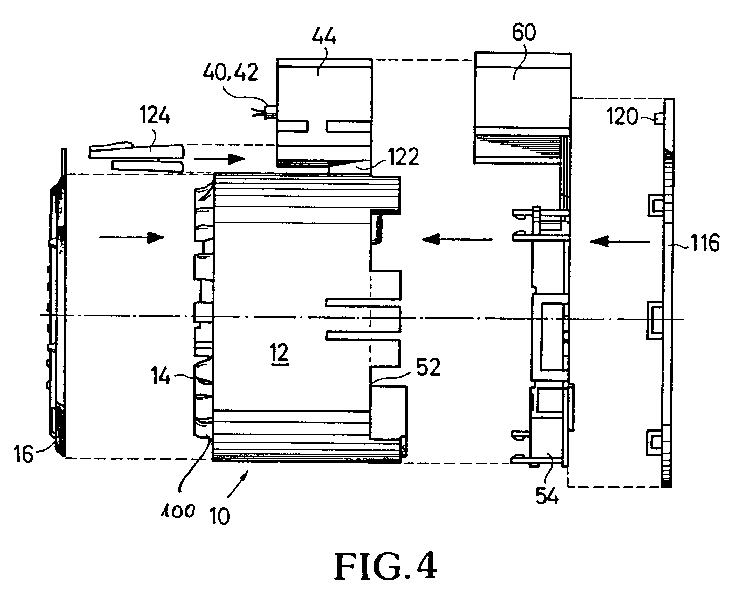

Um eine fertige Einheit bestehende aus Träger (10), Deckel (54) sowie Dichtungen (116) und (124) zu erhalten, müssen die einzelnen Teile entsprechend der Darstellung nach Fig. 4 zusammengefügt werden. Um eine montagemäßige Vereinfachung zu erzielen, wird nach einem weiteren Vorschlag der Erfindung der Deckel (54) mit der Flachdichtung (116) und der Träger (10) mit der Dichtung (124) jeweils in einem Zweikomponentenspitzverfahren hergestellt, so daß die erwähnten vier Teile auf zwei reduziert werden. Bei diesem Zweikomponentenspritzverfahren kann es sich um ein Hart/Weich/Hart-Spritzen handeln. Die entsprechend hergestellten Teile erleichtern die Montage und stellen zudem sicher, daß insbesondere die Dichtung und positionsgenau den Deckel (54) bzw. der Brücke (122) zugeordnet sind.

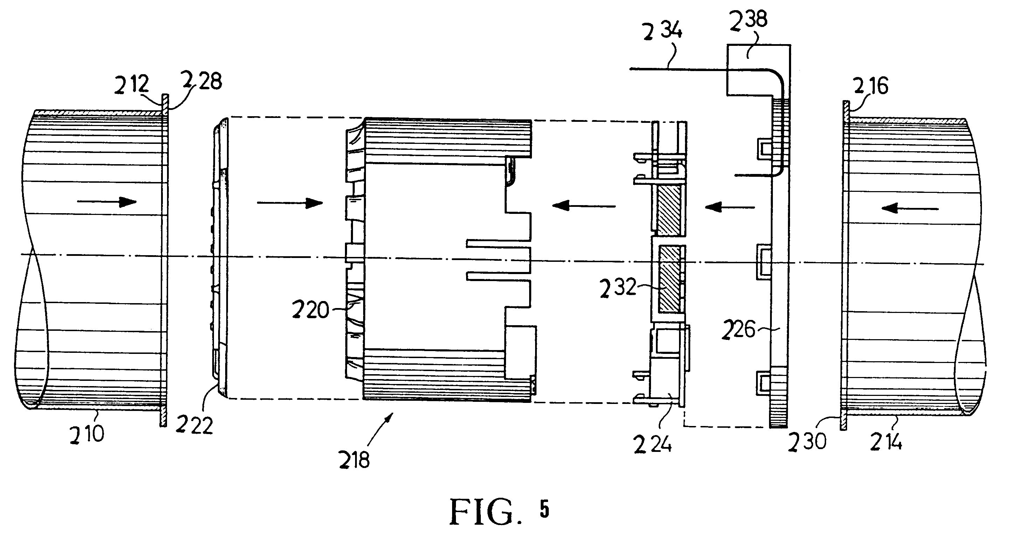

In dem besonders hervorzuhebenden Ausführungsbeispiel nach Fig. 5 sind in auseinandergezogener Darstellung Teile von vorzugsweise einer Motor-Getriebe-Einheit dargestellt, die feuchtigkeitsdicht zu verbinden sind. Ein topfförmiges Gehäuse (210) mit einem flanschartig ausgebildeten Rand (212) ist dabei als Motorgehäuse ausgebildet, um zum Beispiel einen dauermagneterregten Kommutatormotor auszunehmen. Das mit dem Motorgehäuse (210) zu verbindende vorzugsweise ein Getriebe aufnehmende Gehäuse (214) weist ebenfalls Topfform auf und ist mit einem flanschartigen Rand (216) versehen. Die Verbindung der Gehäuse (210) und (214) kann über nicht dargestellte Befestigungselemente durch gegenseitige Verspannung in einer Art erfolgen, wie sie z.B. der EP-A-0 219 681 zu entnehmen ist. In dem Motorgehäuse (210) wird ein topf- oder becherförmiger Träger (218) aus Kunststoff angeordnet, dessen Bodenfläche (220) ein Gitter (222) aufnimmt, das vorzugsweise ein tiefgezogenes Teil ist. Durch diese Herstellungsart bedingt wird ein dreidimensionales Gitter zur Verfügung gestellt, das eine hohe Anzahl und Dichte von Leiterbahnen zur Verfügung stellt. Die zylindrische Wandung des Trägers (210) kann zumindest bereichsweise doppelwandig ausgebildet sein, um im wesentlichen konzentrisch zu einem von dem Träger (218) aufgenommenen Kommutator des Elektromotors elektrische und elektronische Bauelemente positionsgenau und dichtgepackt derart aufzunehmen, daß eine weitgehend automatische Bestückung erfolgt, so daß eine Automatenfertigung möglich wird.

Auf dem Träger (218) wird stirnseitig ein Deckelteil (224) über vorzugsweise Rastnasen festgerastet. Außenseitig ist das Deckelteil (214) mit einer Dichtung (226) versehen, die entweder rastend mit dem Deckelteil (224) verbunden ist oder aber vorzugsweise in einem Zweikomponenten-Spritzverfahren integral mit dem Deckelteil (224) ausgebildet ist, daß ein Hartkunststoffteil ist, wohingegen die Dichtung (226) insbesondere eine dynamisch vernetztes Polyolefinelastomer ist. Die Dichtung (226) verläuft zwischen den flanschartigen Rändern (212) und (216), liegt also an den jeweiligen Stirnflächen (228) und (230) an und wird beim Verspannen der Gehäuse (210) und (214) in einem Umfang zusammengedrückt, daß eine hinreichende Dichtung zwischen den Gehäusen (210) und (214) gewährleistet ist.

Das Deckelteil (224) weist als integralen Bestandteil eine Aufnahme (232) für vorzugsweise eine Drehzahlregelung für den Elektromotor auf, um in Abhängigkeit von den Einsatzbedürfnissen mit den entsprechenden elektrischen und elektronischen Bauelementen bestückt zu werden oder nicht.

Die elektrischen in das Innere des Gehäuses (210) zu führenden Kabel (234) zum Anschluß an die Kohlebürsten oder elektrischen Bauelemente wie der Drehzahlregelung werden im Material der Dichtung (226) zwischen den Rändern (212) und (216) geführt, so daß es des nach dem Stand erforderlichen Ausschnitts in der Wandung des Motorgehäuses nicht bedarf. Um ein Abquetschen der Kabel (234) zu vermeiden, weist die Dichtung (226) eine hinreichende Stärke auf. So weist diese vorzugsweise eine Stärke auf, die 5 bis 10, vorzugsweise 6 bis 7 mal größer als der Durchmesser des stärksten elektrischen Kabels (234) ist. Beispielhaft kann die Stärke der scheibenförmigen Dichtung (226) 3 bis 3,5 mm betragen.

Das besonders hervorzuhebende Gitter (16) ist tiefgezogen und topfförmig ausgebildet, wie auch die Detailzeichnungen nach der Fig. 6 verdeutlichen sollen.

So besteht das Gitter (16) aus einer Bodenfläche (324), zu der parallel eine Stufe (326) verläuft, an die sich eine konisch erweiternde Umfangswandung (328) anschließt.

Das Gitter (16) ist demzufolge durch die Basis- oder Bodenfläche (324), die Stufe (326) und sich an die Stufe anschließenden Wandungen mehrstufig ausgebildet, die insbesondere nach Einbau in einem Träger und Durchschneiden einzelner Bereiche in einer Vielzahl voneinander getrennte elektrische Leiterbahnen unterteilt werden. Dabei können sich die Leiterbahnen sowohl in den einzelnen parallel zueinander verlaufenden Ebenen, als auch senkrecht zu diesen erstrecken. Hierduch ergibt sich auf engstem Raum eine hohe Dichte von Leiterbahnen, die eine umfassende Verschaltung des Elektromotors mit z.B. Entstörungsmitteln oder anderen elektrischen Shaltungen wie z.B. einer Drehzahlregelung ermöglichen.

So kann ein Strompfad (329) von Punkt (331) zu Punkt (333) verlaufen. Der Strompfad (329) ist folglich gekrümmt und verläuft in einer zur Basisfläche (324) abgewinkelten Ebene. Durch das Tiefziehen ist dies möglich, ohne daß sich in der Basisfläche (324) Falten ergeben. Bei einem Stanzgitter, das bereichsweise gebogen wird, wäre dagegen ein Verlauf einer Leiterbahn entsprechend der Bahn (329) ausgeschlossen.

## Patentansprüche

1. Becherförmiger Träger (10) aus Kunststoff, bestimmt für einen Elektromotor wie dauermagneterregten Motor für z.B. ein Elektrowerkzeug oder Fensterheber, zur Aufnahme von mit dem Kommutator des Motors zusammenwirkenden Kohlebürsten, elektrisch und elektronischen Bauelementen z.B. zur Funkenentstörung sowie diese verbindenden Leiterbahnen, wobei der Träger (10) zur Bildung von für die Bauelemente bestimmten Aufnahmekammern (34, 36, 38, 41) zumindest bereichsweise doppelwandig ausgebildet ist,
**dadurch gekennzeichnet**,
daß die Aufnahmekammern (34, 36, 38, 41) in Richtung des Bodenbereichs (100) des Trägers (10) sich zum Bodenbereich erstreckende, als Führungen für Anschlußfahnen der Bauelemente dienende Durchbrechungen (46, 48, 49, 51, 53, 55) aufweisen, daß der Bodenbereich außenseitig mit einem aus Blechmaterial bestehenden, die Leiterbahnen bildenden Gitter (16) versehen ist und daß der Träger (10) mit einem Deckelelement (54) auf der dem Bodenbereich gegenüberliegenden Stirnseite zumindest bereichsweise verschließbar ist, an dem außenseitig eine Flachdichtung (116) anordbar ist.

2. Träger nach Anspruch 1,
**dadurch gekennzeichnet**,
daß die Durchbrechungen (46, 48, 49, 51, 53, 55) in Richtung des Bodenbereichs (100) des Trägers (10) konisch verjüngt sind.

3. Träger nach Anspruch 1,
**dadurch gekennzeichnet**,
daß das Gitter (16) ein zumindest einstufig tiefgezogenes Blechteil ist.

4. Träger nach Anspruch 3,
**dadurch gekennzeichnet**,
daß die Leiterbahnen (324, 326, 328, 329) in unterschiedlichen, bereichsweise zueinander abgewinkelten Ebenen verlaufen und zumindest teilweise dem Verlauf einer Krümmung folgen.

5. Träger nach Anspruch 1,
**dadurch gekennzeichnet**,
daß die den Motor mit Strom versorgenden Leitungen (234) vollständig innerhalb der beidseitig druckbeaufschlagten Dichtung (226) verlaufen.

6. Träger insbesondere nach Anspruch 1,
**dadurch gekennzeichnet**,
daß das Deckelelement (54, 224)) und die außenseitig angeordnete Dichtung (116, 226) in einem Zweikomponentenspritzverfahren als Einheit hergestellt sind.

7. Verfahren zur Bestückung eines becherförmigen Trägers (10) aus Kunststoff, bestimmt für einen Elektromotor, mit Kohlebürsten und elektrischen und elektronischen Bauelementen, die in Kammern (34, 36, 38, 41) und/oder Vertiefungen des Trägers (10) angeordnet werden und mittels Leiterbahnen (324, 326, 328, 329) verschaltet werden,
**gekennzeichnet durch**, die Verfahrensschritte
- Einbringen der elektrisch und elektronischen Bauelemente in die sich zum Bodenbereich (100) des Trägers (10) erstreckende Durchbrechungen (46, 48, 49, 51, 53, 55) aufweisenden Kammern (34, 36, 38, 41) oder Vertiefungen, wobei Anschlußfahnen der Bauelemente die Durchbrechungen durchsetzen und mit ihren freien Enden außenseitig über den Bodenbereich des Trägers hervorstehen,
- Anordnen eines die Leiterbahnen (46, 48, 49, 51, 53, 55) bildenden Gitters (16) von außen auf den Bodenbereich (100) des Trägers (10),
- elektrisch leitendes Verbinden der Anschlußfahnen mit dem Gitter (16)
- und Freischneiden des Gitters (16) zur Erzielung der erforderlichen Leiterbahn (46, 48, 49, 51, 53, 55).

8. Verfahren nach Anspruch 7,
**dadurch gekennzeichnet**,
daß vor dem Freischneiden des Gitters (16) über diesem vorstehende Enden der Anschlußfahnen entfernt werden.

## Claims

1. A cup-shaped support (10) made of plastic designed for an electromotor like a permanent magnet-excited motor for e.g. an electric tool of sash lifter for lodging carbon brushes and electric and electronic elements, e.g. for spark screening, as well as conductor paths connecting the same, which are cooperated with the commutator of the motor, where the support (10) is of double-walled construction, at least areawise, to form chambers for housing the individual elements, **characterized** in that the receiving chambers (34, 36, 38, 41) have openings (46, 48 49, 51, 53, 55) extending in direction of the bottom area (100) of the support (10) to the bottom area serving as guides for connection lugs of the elements; that the bottom area on its outside is provided with a grid (16) made of sheet metal and defining the conductor paths; and that the support (10) can be covered, at least areawise, by means of a cover element (54) on the front face opposite to the bottom area, on the outer surface of which a flat seal (116) can be arranged.

2. A support according to Claim 1,
**characterized** in that the openings (46, 48, 49, 51, 53, 55) are conically tapering in the direction of the bottom area (100) of the support (10).

3. A support according to Claim 1,
**characterized** in that the grid (16) is an at least single stage deep-drawn sheet metal part.

4. A support according to Claim 3,
**characerized** in that the conductor paths (324, 326, 328, 329) are extending in different planes being areawise at an angle to each other, and following the course of a curve, at least partially.

5. A support according to Claim 1,
**characterized** in that the power supply lines (234) for the motor are running completely within the seal (226) to which pressure is admitted from both sides.

6. A support especially according to Claim 1,
**characterized** in that the cover element (54, 224) and the seal (116, 226) being arranged on the outer surface, are constructed as a unit in a two-components injection molding.

7. A method for equipping a cup-shaped support (10) made of plastic and designed for an electromotor with carbon brushes and electric and electronic elements, that will be arranged in chambers (34, 36, 38, 41) and/or recesses of the support (10) and connected by means of conductor paths (324, 326, 328, 329),
**characterized** by the following procedural steps
- placing the electric and electronic elements into the chambers (34, 36, 38, 41) or, recesses having openings extending to the bottom area (100) of the support (10), where connection lugs of the elements are penetrating the openings and with their free ends are protruding on the outside above the bottom area of the support,
- arranging a grid (16) forming the conductor paths (46, 48, 49, 51, 53, 55) outside to the bottom area (100) of the support (10),
- electrically conducting connection of the connection lugs with the grid (16), and
- cutting free the grid (16) for obtaining the necessary conductor path (46, 48, 49, 51, 53, 55)

8. A method according to Claim 7,
**characterized** in that before cutting free the grid (16), the ends of the connection lugs projecting therefrom are removed.

## Revendications

1. Support (10) en forme de godet en matière plastique, destiné à un moteur électrique tel qu'un moteur à excitation par aimant permanent, par exemple pour un outil ou un lève-vitre, pour recevoir les balais coopérant avec le commutateur du moteur, les composants électriques et électroniques comme par exemple les moyens de déparasitage ainsi que les chemins conducteurs de liaison, le support (10) étant au moins réalisé dans certaines zones en double paroi pour former des chambres (34, 36, 38, 41) destinées à recevoir certains composants, support caractérisé en ce que les chambres de réception (34, 36, 38, 41) comportent en direction du fond (100) du support (10), des passages (46, 48, 49, 51, 53, 55) s'étendant vers le fond et servant de guides pour les pattes de raccordement des composants, le fond étant relié sur la face extérieure à une grille (16) formant les chemins conducteurs, cette grille étant réalisée en une tôle et en ce que la face frontale du support (10), opposée au fond, peut au moins être fermée partiellement par un élément de recouvrement (54) recevant sur sa face extérieure un Joint plat (116).

2. Support selon la revendication 1, caractérisé en ce que les passages (46, 48, 49, 51, 53, 55) vont en diminuant de manière conique vers le fond (100) du support (10).

3. Support selon la revendication 1, caractérisé en ce que la grille (16) est une partie en tôle qui est travaillée par étirage profond en au moins une étape.

4. Support selon la revendication 3, caractérisé en ce que les chemins conducteurs (324, 326, 328, 329) circulent dans des plans différents, et qui par zones peuvent être coudés les uns par rapport aux autres et suivent au moins partiellement le tracé d'un coude.

5. Support selon la revendication 1, caractérisé en ce que les conducteurs (234) d'alimentation électrique du moteur passent complètement dans le joint (226) comprimé sur ses deux faces.

6. Support selon la revendication 1, caractérisé en ce que le couvercle (54, 224) et le joint (116, 226) prévue sur la race extérieure sont réalisés en une seule pièce par un procédé d'injection à deux composants.

7. Procédé pour garnir un support (10) en forme de godet, en matière plastique, destiné à un moteur électrique avec des balaisen charbon et des composants électriques et électroniques, qui sont logés dans des chambres (34, 36, 38, 41) et/ou des cavités du support (10), et sont branchés par des chemins conducteurs (324, 326, 328, 329), caractérisé par les étapes suivantes :
- introduction des composants électriques et électroniques dans les chambres ou cavités (34, 36, 38, 41) qui comportent des passages (46, 48, 49, 51, 53, 55) s'étendent jusqu'au fond (100) du support (10), les pattes de raccordement des composants traversant les passages et leur extrémité libre étant en saillie au-delà du fond du support,
- mise en place d'une grille (16) formant les chemins conducteurs (46, 48, 49, 51, 53, 55) par l'extérieur du fond (100) du support (10),
- connexion électrique des broches de raccordement à la grille (16),
- et découpe de dégagement de la grille (16) pour former les chemins conducteurs (46, 48, 49, 51, 53, 55).

8. Procédé selon la revendication 7, caractérisé en ce qu'avant de découper pour dégager la grille (16) on enlève les extrémités des broches de branchement en saillie par rapport à la grille.
